(19) **Europäisches Patentamt**
**European Patent Office**
**Office européen des brevets**

(11) **EP 3 805 583 B1**

(12) **FASCICULE DE BREVET EUROPEEN**

(45) Date de publication et mention
de la délivrance du brevet:
**20.04.2022   Bulletin 2022/16**

(21) Numéro de dépôt: **20200199.6**

(22) Date de dépôt: **06.10.2020**

(51) Classification Internationale des Brevets (IPC):
*F16C 19/54* (2006.01)      *F16C 33/30* (2006.01)
*F16C 33/32* (2006.01)      *F16C 33/56* (2006.01)
*H02K 7/08* (2006.01)      *F16C 33/58* (2006.01)
*H02K 5/173* (2006.01)      *H02K 5/24* (2006.01)

(52) Classification Coopérative des Brevets (CPC):
**F16C 19/542; F16C 33/303; F16C 33/32;**
**F16C 33/56; H02K 7/083;** F16C 19/546;
F16C 33/585; F16C 33/586; F16C 2204/14;
F16C 2206/40; F16C 2208/20; F16C 2240/34;
F16C 2326/10; F16C 2380/27; H02K 5/1732;
(Cont.)

(54) **MOTEUR ET/OU GÉNÉRATEUR POUR UN VÉHICULE FERROVIAIRE, BOGIE ET VÉHICULE FERROVIAIRE ASSOCIÉS**

MOTOR UND/ODER GENERATOR FÜR SCHIENENFAHRZEUG, ENTSPRECHENDES DREHGESTELL UND SCHIENENFAHRZEUG

ENGINE AND/OR GENERATOR FOR A RAILWAY VEHICLE, ASSOCIATED BOGIE AND RAILWAY VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **08.10.2019   FR 1911149**

(43) Date de publication de la demande:
**14.04.2021   Bulletin 2021/15**

(73) Titulaire: **ALSTOM Transport Technologies**
**93400 Saint-Ouen-sur Seine (FR)**

(72) Inventeurs:
• **ROBBE, Gilles**
**25660 MONTFAUCON (FR)**
• **RACLOT, Jean-Philippe**
**25000 BESANCON (FR)**

(74) Mandataire: **Lavoix**
**2, place d'Estienne d'Orves**
**75441 Paris Cedex 09 (FR)**

(56) Documents cités:
EP-A1- 3 269 477          EP-A1- 3 467 327
WO-A1-2013/099586     CN-A- 102 904 367
FR-A1- 2 923 562          JP-B2- 3 417 726
US-A1- 2016 149 466

(52) Classification Coopérative des Brevets (CPC):
(Cont.)
H02K 5/24; Y02T 10/72

**Description**

La présente invention concerne un moteur et/ou générateur, notamment pour un véhicule ferroviaire, un bogie pour un véhicule ferroviaire, et un véhicule ferroviaire.

L'invention s'applique en particulier à des moteurs à haute vitesse, typiquement des moteurs configurés pour fonctionner à une vitesse de rotation comprise entre 5000 et 6000 tours par minute (tr/min). Ces moteurs sont utilisés pour tout type de véhicule ferroviaire, tels que des véhicules lents (par exemple des tramways) ou des véhicules à très haute vitesse (par exemple des véhicules configurés pour circuler à une vitesse supérieure à 250 km/h). Ceci dépend du rapport de réduction de la transmission.

Ces véhicules ferroviaires comprennent des bogies moteurs comportant chacun au moins un moteur. Chaque moteur comprend un carter logeant un stator, et un rotor monté sur un arbre.

L'arbre est relié au carter par des roulements permettant une rotation de l'arbre par rapport au carter à une vitesse élevée, telle que 5000 tr/min. Les roulements tournent ainsi avec une vitesse élevée.

US 2016/149466 décrit un actionneur linéaire comprenant un rotor creux qui a un aimant fixé à une partie de sa surface périphérique externe et ayant une extrémité ouverte et une extrémité fermée ; un corps principal qui a une structure creuse ayant une extrémité ouverte et une extrémité fermée et loge de manière rotative le rotor dans la structure creuse, et est fixé avec un enroulement de stator faisant face à l'aimant ; une section de conversion de mouvement linéaire qui est agencée dans la section creuse du rotor et est déplacée linéairement dans la direction axiale par la rotation du rotor. L'actionneur comprend deux roulements obliques à billes et un roulement cylindrique à billes.

FR 2 923 562 A1 décrit un jeu de roulements à billes pour le guidage d'un arbre de turbomachine à vitesse de rotation dépassant 10 000 tours/min, comportant deux roulements à billes : un premier roulement à billes à contact oblique pour la reprise des efforts axiaux exercés dans une direction axiale principale, le premier roulement comportant une première bague intérieure et une première bague extérieure entre lesquelles roulent des billes en céramique; et un deuxième roulement à billes comportant une deuxième bague extérieure, une deuxième bague intérieure principale de reprise de la charge axiale dans la direction axiale principale et une bague intérieure complémentaire de reprise des efforts axiaux exercés dans la direction axiale opposée à la direction axiale principale, entre lesquelles roulent des billes en céramiques ayant chacune quatre points de contact avec les bagues du deuxième roulement. Ce jeu de roulements à billes est associé à un roulement à rouleaux en céramique.

EP 3 467 327 A1 décrit un dispositif de roulement à billes à contact angulaire à rangées multiples dans lequel des roulements à billes à contact angulaire, ayant chacun un angle de contact, sont agencés dans une configuration dos à dos dans un réseau de trois rangées ou plus et le nombre de rangées des roulements à billes à contact angulaire dans une position avant et le nombre de rangées dans une position arrière sont différents les uns des autres.

EP 3 269 477 A1 décrit un dispositif de broche utilisé, par exemple, dans une machine-outil. Le dispositif de broche comprend un roulement à rouleaux cylindriques à double rangée et un palier de support de charge de poussée tous deux interposés entre une partie avant d'une broche et un boîtier et disposés à partir d'une extrémité avant dans cet ordre.

CN 102 904 367 A décrit un moteur de traction qui utilise une partie de support côté anti-charge, une partie de support d'un côté d'un arbre rotatif, comme site de référence pour fixer l'arbre rotatif. Le moteur comprend deux roulements obliques à billes et un roulement cylindrique à billes.

JP 3 417726 B2 décrit un moteur ferroviaire comprenant un carter, un arbre mobile en rotation sur lui-même par rapport au carter autour d'un axe, et deux roulements obliques à rouleaux connectant l'arbre et le carter, ainsi qu'un roulement cylindrique à rouleaux.

Cependant, les moteurs tels que décrits ne sont pas entièrement satisfaisants. Lors d'une augmentation de la vitesse de rotation de l'arbre, les roulements ont une durée réduite. Ils peuvent également provoquer des instabilités vibratoires du rotor pouvant conduire à des niveaux sonores trop élevés et/ou des défaillances en service, en particulier dans le cas des roulements lubrifiés à la graisse comme c'est usuellement le cas pour les moteurs de traction ferroviaire. Une maintenance fréquente est ainsi requise.

Un but de l'invention est d'augmenter la vitesse de rotation de l'arbre, sans augmenter la fréquence de maintenance et sans dégrader le niveau de fiabilité du moteur.

A cet effet, l'invention concerne un moteur et/ou générateur selon la revendication 1.

Selon des modes particuliers de réalisation, le moteur comprend l'une ou plusieurs des caractéristiques suivantes, prise(s) isolément ou selon toutes les combinaisons techniquement possibles :

- le chemin de contact extérieur comprend, respectivement pour chacune desdites billes, un premier point de contact, le chemin de contact intérieur comprenant, respectivement pour chacune desdites billes, un deuxième point de contact, le premier point de contact et le deuxième point de contact définissant une droite formant un angle compris entre 15 degrés et 25 degrés avec un plan perpendiculaire à l'axe.
- le moteur comprend un rotor, les roulements obliques étant disposés axialement entre le rotor et une partie de l'arbre adaptée pour transmettre un couple de traction vers une boîte de transmission.

- au moins un des roulements obliques comprend une cage comportant du laiton ou du polymère thermostable.
- la bague intérieure définit une gorge comprenant le chemin de contact intérieur, la gorge étant symétrique selon un plan perpendiculaire à l'axe, et la bague extérieure définissant une surface comprenant, successivement suivant l'axe, une première partie, suivie par une deuxième partie, suivie par une troisième partie, la première partie étant une surface cylindrique présentant un premier rayon et la troisième partie étant une surface cylindrique présentant un deuxième rayon strictement supérieur au premier rayon, la deuxième partie comportant le chemin de contact extérieur.
- la bague extérieure définit une surface comprenant, successivement suivant l'axe, une première partie, suivi par une deuxième partie, suivi par une troisième partie, la deuxième partie étant une surface torique.
- chacune des billes comprend un matériau céramique.

L'invention a également pour objet un bogie pour un véhicule ferroviaire, le bogie comprenant au moins un moteur et/ou générateur tel que décrit ci-dessus.

L'invention a enfin pour objet un véhicule ferroviaire comprenant au moins un bogie selon tel que décrit ci-dessus.

L'invention sera mieux comprise à la lecture de la description qui va suivre, donnée uniquement à titre d'exemple et faite en se référant aux dessins annexés, sur lesquels :

La figure 1 est une vue en coupe d'un moteur et/ou générateur pour véhicule ferroviaire, et
La figure 2 est une vue en coupe d'une partie du moteur et/ou générateur représenté sur la figure 1 comprenant un roulement.

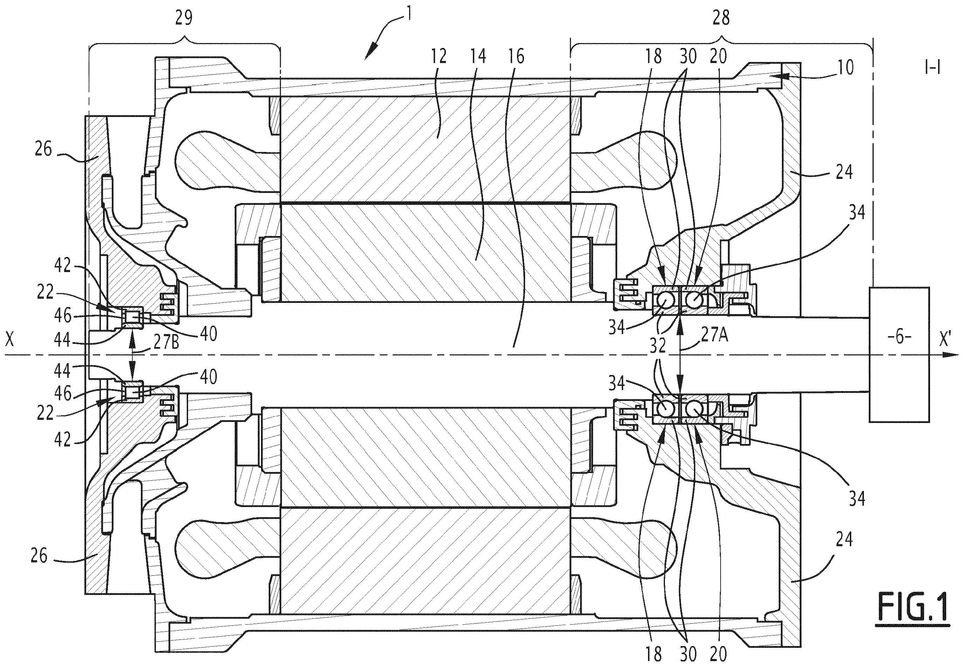

En référence à la figure 1, on décrit une partie d'un bogie d'un véhicule ferroviaire comprenant un moteur 1 et une boîte de transmission 6.

Le moteur 1 est configuré pour transformer une énergie électrique en une énergie mécanique.

Alternativement ou en supplément, le moteur 1 est configuré pour transformer inversement une énergie mécanique en une énergie électrique. Le moteur 1 présentant un tel fonctionnement est appelé générateur. Dans la suite de la description, pour des raisons de lisibilité, le terme « moteur » désigne à la fois un moteur et un générateur.

Le moteur 1 est par exemple un moteur à aimants permanents ou un moteur asynchrone. Le moteur 1 est un moteur de forte puissance, par exemple supérieure à 100 kW.

Le moteur 1 comprend un carter 10, ainsi qu'un stator 12 et un rotor 14 logés dans le carter 10. Le moteur 1 comprend en outre un arbre 16, un premier roulement oblique 18, un deuxième roulement oblique 20 et un roulement cylindrique 22. Les premier et deuxième roulements obliques 18, 20 et le roulement cylindrique 22 relient le carter 10 et l'arbre 16.

En particulier, le carter 10 comprend un premier flasque 24 sur lequel sont fixés, de préférence directement, le premier roulement oblique 18 et le deuxième roulement oblique 20. Le carter 10 comprend en outre un deuxième flasque 26 sur lequel est fixé, de préférence directement, le roulement cylindrique 22.

En variante, non représentée, le premier roulement oblique 18 et le deuxième roulement oblique 20 sont fixés par l'intermédiaire d'un boîtier de palier au premier flasque 24. De même, le roulement cylindrique 22 est par exemple fixé par l'intermédiaire d'un boîtier de palier au deuxième flasque 26. Dans ce mode de réalisation, le flasque 24, 26 est formé par exemple par un alliage d'aluminium.

Le rotor 14 est fixé sur l'arbre 16 du moteur 1 à l'intérieur du carter 10. Le rotor 14 est monté mobile en rotation par rapport au stator 12 autour d'un axe X-X', également appelé axe de rotation. Le stator 12 entoure le rotor 14 parallèlement à l'axe X-X' à l'intérieur du carter 10 et est coaxial avec le rotor 14. De façon classique, le rotor 14 et le stator 12 permettent de transformer une énergie électrique en une énergie mécanique transmise par l'arbre 16 ou inversement une énergie mécanique en une énergie électrique.

On définit pour l'arbre 16 un premier tronçon 28 situé axialement d'un côté du rotor 14 adapté pour transmettre un couple mécanique entre le rotor 14 et la boîte de transmission 6, et un deuxième tronçon 29 opposé au premier tronçon 28 par rapport au rotor 14. Notamment, les premier et deuxième roulements obliques 18, 20 sont disposés au niveau du premier tronçon 28 et le roulement cylindrique 22 est disposé au niveau du deuxième tronçon 29. En particulier, suivant l'axe X-X', le premier roulement oblique 18 et le deuxième roulement oblique 20 sont positionnés entre le rotor 14 et la boîte de transmission 6.

L'arbre 16 a, au niveau des premier et deuxième roulement obliques 18, 20, un premier diamètre 27A. Le premier diamètre 27A est choisi de telle manière que l'arbre 16 ayant ce paramètre est apte à transférer un couple mécanique entre le rotor 14 et la boîte de transmission 6. En particulier, le premier diamètre 27A est un diamètre minimal requis pour permettre la transmission du couple mécanique.

Le premier diamètre 27A (visible en particulier sur la figure 1) de l'arbre 16 dans le premier tronçon 28 est par exemple compris entre 40 et 100mm.

L'arbre 16 a, au niveau du roulement cylindrique 22, un deuxième diamètre 27B. Le deuxième diamètre 27B est strictement inférieur au premier diamètre 27A. Le deuxième diamètre 27B du deuxième tronçon 29 est strictement inférieur au premier diamètre 27A du premier tronçon 28 du fait qu'aucun couple n'est à transférer dans le deuxième tronçon 29 de l'arbre 16.

Selon un mode de réalisation alternatif, le deuxième tronçon 29 de l'arbre 16 est également susceptible à transférer un couple mécanique, notamment au détriment du couple maximal transmissible.

Pendant la rotation de l'arbre 16, le roulement cylindrique 22 tourne ainsi plus lentement par rapport aux premier et deuxième roulements obliques 18, 20. Notamment, la vitesse périphérique du roulement 18, 20 est plus faible. La vitesse de rotation de l'arbre 16 (par exemple en tr/min) est la même pour le premier tronçon 28 et le deuxième tronçon 29. La vitesse périphérique dépend, de manière connue en soi, d'un rayon du roulement 18, 20, 22 et de la vitesse de rotation de l'arbre 16. Par exemple, la vitesse périphérique admissible pour un roulement à rouleaux est plus faible que celle d'un roulement à billes.

Les premier et deuxième roulements obliques 18, 20 forment une butée axiale de l'arbre 16. En d'autres termes, les premier et deuxième roulements 18, 20 sont configurés pour limiter un mouvement axial de l'arbre 16.

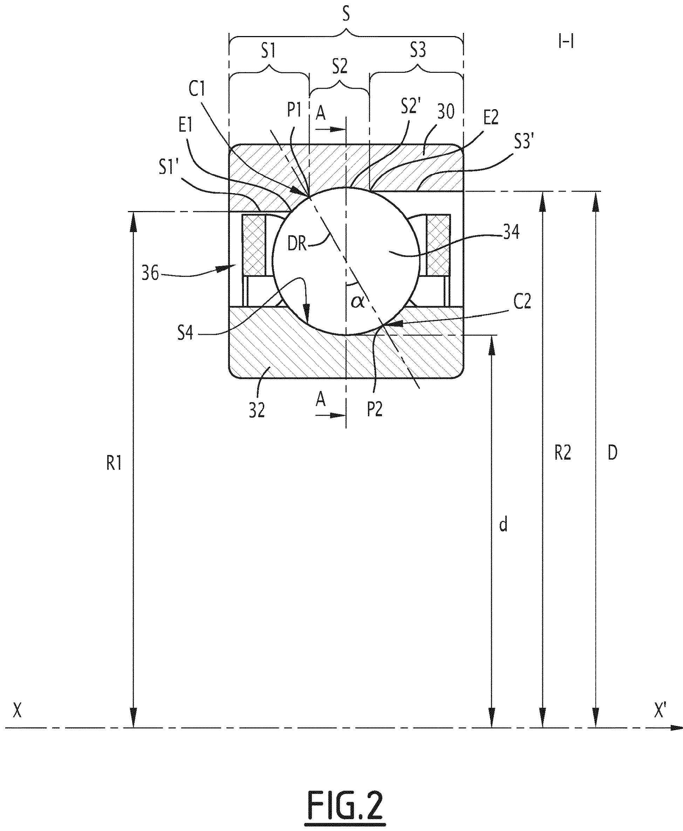

Les premier et deuxième roulements obliques 18, 20 sont de type roulements de broche. Les premier et deuxième roulements obliques 18, 20 comprennent chacun une bague extérieure 30, une bague intérieure 32, une pluralité de billes 34 et une cage 36 (visible en particulier sur la figure 2).

La bague intérieure 32 est fixée sur l'arbre 16 et la bague extérieure 30 est fixée sur le carter 10, en particulier sur le premier flasque 24. Les billes 34 sont interposées entre la bague extérieure 30 et la bague intérieure 32.

La bague extérieure 30 définit une surface S comprenant, successivement suivant l'axe X-X', une première partie S1, suivi par une deuxième partie S2, suivi par une troisième partie S3.

La première partie S1 est une surface cylindrique présentant un premier rayon R1 par rapport à l'axe X-X'.

La deuxième partie S2 est une surface torique. La troisième partie S3 est une surface cylindrique présentant un deuxième rayon R2 strictement supérieur au premier rayon R1. La deuxième partie S2 est disposée entre la première partie S1 et la troisième partie S3.

Comme visible en particulier sur la figure 2, la première partie S1 définit une droite d'intersection S1' avec un plan radial I-I comprenant l'axe X-X' et la troisième partie S3 définit une droite d'intersection S3' avec le plan radial I-I comprenant l'axe X-X'. La droite d'intersection S1' est située à une distance égale au premier rayon R1 par rapport à l'axe X-X' et la droite d'intersection S3' est située à une distance égale au deuxième rayon R2 par rapport à l'axe X-X'.

La deuxième partie S2 forme, dans le plan radial I-I\, une courbe S2'. La courbe S2' est, à une première extrémité E1, reliée à la droite d'intersection S1' et à une deuxième extrémité E2, à la droite d'intersection S3'. La courbe S2' est par exemple une portion de cercle.

La bague intérieure 32 définit une gorge S4 symétrique selon un plan A-A perpendiculaire à l'axe X-X'. La gorge S4 forme, selon le plan radial I-I, une courbe, telle qu'une portion de cercle (visible en particulier sur la figure 2).

Chacune des billes 34 définit un chemin de contact extérieur C1 sur la bague extérieure 30 et un chemin de contact intérieur C2 sur la bague intérieure 32. Le chemin de contact extérieur C1 est décalé axialement par rapport au chemin intérieur C2.

Le chemin de contact extérieur C1 comprend, respectivement pour chacune des billes 34, un premier point de contact P1. Le chemin de contact intérieur C2 comprend, respectivement pour chacune des billes 34, un deuxième point de contact P2.

En particulier, le premier point de contact P1 forme respectivement un contact de l'une des billes 34 avec la bague extérieure 30 et le deuxième point de contact P2 forme respectivement un contact de l'une des billes 34 avec la bague intérieure 32.

En particulier, la deuxième partie S2 de la surface S comporte le chemin de contact extérieur C1 et la gorge S4 comporte le chemin de contact intérieur C2.

En d'autres termes, chacune des billes 34 forme un contact oblique avec la bague extérieure 30 et la bague intérieure 32. Par « roulement oblique », il est notamment entendu des roulements à contact oblique. Comme visible en particulier sur la figure 2, les premier et deuxième points de contact P1, P2 définissent une droite DR formant un angle $\alpha$ selon le plan A-A perpendiculaire à l'axe X-X'. L'angle $\alpha$ est par exemple compris entre 10 et 25 degrés, et de préférence égal à 25 degrés.

Par exemple, chacune des billes 34 comprend un matériau céramique. De préférence, chaque bille comprend du matériau céramique, notamment à au moins 50 % en masse. Plus préférablement, chaque bille est formée d'un seul matériau. Par exemple chaque bille est formée du matériau céramique.

La cage 36 est configurée pour maintenir les billes 34 dans une position donnée l'une par rapport à l'autre.

Selon un mode de réalisation, la cage 36 est réalisée en laiton, à au moins 50% en masse, de préférence à au moins 80% et plus préférablement à au moins 95%. En particulier, la cage 36 est formée d'un seul matériau. Par exemple, la cage 36 est formée de laiton.

Selon un autre mode de réalisation, la cage 36 est réalisée en un polymère thermostable. Par exemple, la cage 36 est formée en en polyétheréthercétone ( PEEK, sigle de PolyEtherEtherKetone), à au moins 50% en masse, de préférence à au moins 80% et plus préférablement à au moins 95%. Plus préférablement, la cage 36 est formée en PEEK selon un mode de réalisation.

La cage 36 formée en PEEK permet en particulier d'augmenter la vitesse périphérique possible de rotation de chaque roulement oblique 18, 20 du fait d'un poids faible, tout en fournissant une tenue mécanique suffisante.

Les roulements obliques 18, 20 sont avantageusement caractérisés par un facteur NxDm, N étant le nombre de rotations par minute de l'arbre 16, x étant le signe multiplicatif, et Dm étant le diamètre moyen en millimètre du roulement oblique 18, 20 respectif. Le diamètre moyen Dm est défini comme suit (visible en particulier sur la figure 2) :

$$Dm = (D+d)/2,$$

avec :

D étant un diamètre extérieur du premier respectivement deuxième roulement, et d étant un diamètre intérieur du premier respectivement deuxième roulement.

Le facteur NxDm du premier respectivement deuxième roulement est compris entre 500000 et 850000. Par exemple, le diamètre moyen du roulement 18 ou 20 est de 102,5 mm et la vitesse maximale est de 7500 tr/min d'où un NxDm de 768750.

En particulier, le facteur NxDm est proportionnel à la vitesse périphérique définie ci-dessus.

Le roulement cylindrique 22 forme un pivot glissant. En d'autres termes, le roulement cylindrique 22 est configuré pour supporter uniquement des forces radiales appliquées à l'arbre 16.

Le roulement cylindrique 22 comprend des rouleaux cylindriques 40, une bague extérieure 42 et une bague intérieure 44. Le roulement cylindrique 22 comprend en outre une cage 46 configurée pour maintenir une distance prédéfinie d'un rouleau cylindrique 40 par rapport à un autre.

La bague extérieure 42 est par exemple fixée sur le deuxième flasque 26 et la bague intérieure 44 est fixée sur l'arbre 16.

Les rouleaux cylindriques 40 sont réalisés par exemple en matériau céramique.

Le roulement cylindrique 22 est caractérisé par un facteur NxDm inférieur aux roulements obliques 18, 20. Il est par exemple de l'ordre de 600000.

Grâce aux caractéristiques décrites ci-dessus, il est possible d'augmenter la vitesse de rotation de l'arbre 16, sans augmenter la fréquence de maintenance ni dégrader la fiabilité du moteur.

Le moteur 1 selon l'inventeur présente une pluralité d'avantages.

Le fait de disposer de deux roulements obliques 18, 20 permet d'augmenter la vitesse de rotation de l'arbre 16, tout en maintenant la fréquence de maintenance basse.

Les roulements obliques 18, 20 permettent de minimiser le jeu de l'arbre 16 par rapport à la structure fixe du moteur 1 (notamment les premier et deuxième flasques 24 et 26, le stator 12 et le carter 10), et ainsi de réduire des vibrations de l'arbre 16 lors des rotations à haute vitesse, nuisibles à la fiabilité de la machine.

Par ailleurs, le fait de fixer le premier roulement oblique 18 et le deuxième roulement oblique 20 sur l'arbre 16 au premier tronçon 28 ayant le premier diamètre 27A, et de disposer le roulement cylindrique 22 sur l'arbre 16 au deuxième tronçon 29 ayant le deuxième diamètre 27B, permet d'obtenir un moteur 1 configuré pour tourner plus vite, sans impliquer une usure élevée des roulements 18, 20, 22. En effet, la vitesse périphérique du roulement cylindrique 22 est inférieure à la vitesse périphérique des roulements obliques 18, 20, du fait que le diamètre 27B est inférieur au diamètre 27A. Du fait d'une géométrie optimisée des roulements obliques 18, 20 par rapport au roulement cylindrique 22, les roulements obliques 18, 20 sont particulièrement adaptés pour tourner à des vitesses plus élevées qu'avec la solution de l'art antérieur.

En particulier, les roulements obliques 18, 20 permettent une rotation de l'arbre 16 d'au moins 10000 tr/min, y compris par exemple dans un mode de réalisation où les roulements sont lubrifiés à la graisse (et a fortiori dans le cas où les roulements sont lubrifiés à l'huile).

Notamment, selon l'invention, pour un roulement de diamètre donné, le nombre de billes 34 est optimisé pour permettre le renforcement de la cage 36 pour être compatible avec les contraintes de l'environnement ferroviaire, telles que des vitesses de rotations élevées.

En outre, le moteur 1 selon l'invention est particulièrement compact, grâce aux roulements obliques 18, 20 comprenant la cage 36 qui permettent une vitesse de rotation plus élevée.

## Revendications

1. Moteur et/ou générateur (1) pour un véhicule ferroviaire, comprenant un carter (10), un arbre (16) mobile en rotation sur lui-même par rapport au carter (10) autour d'un axe (X-X'), et au moins deux roulements obliques (18, 20) connectant l'arbre (16) et le carter (10),

chacun des deux roulements obliques (18, 20) comprenant une bague extérieure (30) fixée sur le carter (10), une bague intérieure (32) fixée sur l'arbre (16) et une pluralité de billes (34), chacune des billes (34) définissant un chemin de contact extérieur (C1) sur la bague extérieure (30) et un chemin de contact intérieur (C2) sur la bague intérieure (32), le chemin de contact extérieur (C1) étant décalé axialement par rapport au chemin de contact intérieur (C2), **caractérisé en ce que** le moteur (1) comprend en outre au moins un roulement cylindrique (22) connectant l'arbre (16) et le carter (10), le roulement cylindrique (22) comprenant des rouleaux cylindriques (40), et **en ce que** l'arbre (16) a, au niveau des premier et deuxième roulements obliques (18, 20), un premier diamètre (27A), et l'arbre (16) a, au niveau du roulement cylindrique (22), un deuxième diamètre (27B), le deuxième diamètre (27B) étant strictement inférieur au premier diamètre (27A), le moteur (1) étant un moteur de forte puissance, supérieure à 100 kW.

2. Moteur et/ou générateur (1) selon la revendication 1, dans lequel le chemin de contact extérieur (C1) comprend, respectivement pour chacune desdites billes (34), un premier point de contact (P1), le chemin de contact intérieur (C2) comprenant, respectivement pour chacune desdites billes (34), un deuxième point de contact (P2), le premier point de contact (P1) et le deuxième point de contact (P2) définissant une droite (DR) formant un angle (a) compris entre 15 degrés et 25 degrés avec un plan (A-A) perpendiculaire à l'axe (X-X').

3. Moteur et/ou générateur (1) selon l'une quelconque des revendications précédentes, le moteur (1) comprenant un rotor (14), les roulements obliques (18, 20) étant disposés axialement entre le rotor (14) et une partie de l'arbre (16) adaptée pour transmettre un couple de traction vers une boîte de transmission (6).

4. Moteur et/ou générateur (1) selon l'une quelconque des revendications précédentes, dans lequel au moins un des roulements obliques (18, 20) comprend une cage (36) comportant du laiton ou du polymère thermostable.

5. Moteur et/ou générateur (1) selon l'une quelconque des revendications précédentes, dans lequel la bague intérieure (32) définit une gorge (S4) comprenant le chemin de contact intérieur (C2), la gorge (S4) étant symétrique selon un plan (A-A) perpendiculaire à l'axe (X-X'), et la bague extérieure (30) définissant une surface (S) comprenant, successivement suivant l'axe (X-X'), une première partie (S1), suivie par une deuxième partie (S2), suivie par une troisième partie (S3), la première partie (S1) étant une surface cylindrique présentant un premier rayon (R1) et la troisième partie (S3) étant une surface cylindrique présentant un deuxième rayon (R2) strictement supérieur au premier rayon (R1), la deuxième partie (S2) comportant le chemin de contact extérieur (C1).

6. Moteur et/ou générateur (1) selon l'une quelconque des revendications précédentes, dans lequel la bague extérieure (30) définit une surface (S) comprenant, successivement suivant l'axe (X-X'), une première partie (S1), suivi par une deuxième partie (S2), suivi par une troisième partie (S3), la deuxième partie (S2) étant une surface torique.

7. Moteur et/ou générateur (1) selon l'une quelconque des revendications précédentes, dans lequel chacune des billes (34) comprend un matériau céramique.

8. Bogie pour un véhicule ferroviaire, le bogie comprenant au moins un moteur et/ou générateur (1) selon l'une quelconque des revendications précédentes.

9. Véhicule ferroviaire comprenant au moins un bogie selon la revendication 8.

**Patentansprüche**

1. Motor und/oder Generator (1) für ein Schienenfahrzeug, umfassend ein Gehäuse (10), eine im Verhältnis zum Gehäuse (10) um sich selbst um eine Achse (X-X') rotationsbewegliche Welle (16) und mindestens zwei Schrägwälzlager (18, 20), die die Welle (16) und das Gehäuse (10) verbinden, wobei jedes der zwei Schrägwälzlager (18, 20) einen auf dem Gehäuse (10) befestigten äußeren Ring (30), einen auf der Welle (16) befestigten inneren Ring (32) und eine Vielzahl von Kugeln (34) umfasst, wobei jede der Kugeln (34) einen äußeren Kontaktweg (C1) auf dem äußeren Ring (30) und einen inneren Kontaktweg (C2) auf dem inneren Ring (32) definiert, wobei der äußere Kontaktweg (C1) im Verhältnis zum inneren Kontaktweg (C2) axial versetzt ist, **dadurch gekennzeichnet, dass** der Motor (1) ferner mindestens ein zylindrisches Wälzlager (22) umfasst, das die Welle (16) und das Gehäuse (10) verbindet, wobei das zylindrische Wälzlager (22) zylindrische Wälzkörper (40) umfasst, und dass die Welle (16) im Bereich des ersten und zweiten Schrägwälzlagers (18, 20) einen ersten Durchmesser (27A) hat und die Welle (16) im Bereich des zylindrischen Wälzlagers (22) einen zweiten Durchmesser (27B) hat, wobei der zweite Durchmesser (27B) strikt kleiner als der erste Durchmesser (27A) ist, wobei der Motor (1) ein leistungsstarker Motor mit über 100 kW ist.

2. Motor und/oder Generator (1) nach Anspruch 1, wobei der äußere Kontaktweg (C1) jeweils für jede der Kugeln (34) einen ersten Kontaktpunkt (P1) umfasst, wobei der innere Kontaktweg (C2) jeweils für jede der Kugeln (34) einen zweiten Kontaktpunkt (P2) umfasst, wobei der erste Kontaktpunkt (P1) und der zweite Kontaktpunkt (P2) eine Gerade (DR) definieren, die einen Winkel (a) bildet, der zwischen 15 Grad und 25 Grad mit einer Ebene (A-A) liegt, die senkrecht zur Achse (X-X') ist.

3. Motor und/oder Generator (1) nach einem der vorangehenden Ansprüche, wobei der Motor (1) einen Rotor (14) umfasst, wobei die Schrägwälzlager (18, 20) zwischen dem Rotor (14) und einem Teil der Welle (16), der geeignet ist, ein Traktionsmoment an ein Getriebe (6) zu übertragen, axial angeordnet sind.

4. Motor und/oder Generator (1) nach einem der vorangehenden Ansprüche, wobei mindestens eins der Schrägwälzlager (18, 20) einen Käfig (36) umfasst, der Messing oder thermisch stabiles Polymer aufweist.

5. Motor und/oder Generator (1) nach einem der vorangehenden Ansprüche, wobei der innere Ring (32) eine Vertiefung (S4) definiert, die den inneren Kontaktweg (C2) umfasst, wobei die Vertiefung (S4) gemäß einer Ebene (A-A), die senkrecht zur Achse (X-X') ist, symmetrisch ist, und der äußere Ring (30) eine Fläche (S) definiert, die nacheinander gemäß der Achse (X-X') einen ersten Teil (S1), gefolgt von einem zweiten Teil (S2), gefolgt von einem dritten Teil (S3), umfasst, wobei der erste Teil (S1) eine zylindrische Fläche ist, die einen ersten Radius (R1) aufweist und der dritte Teil (S3) eine zylindrische Fläche ist, die einen zweiten Radius (R2) aufweist, der strikt größer als der erste Radius (R1) ist, wobei der zweite Teil (S2) den äußeren Kontaktweg (C1) aufweist.

6. Motor und/oder Generator (1) nach einem der vorangehenden Ansprüche, wobei der äußere Ring (30) eine Fläche (S) definiert, die nacheinander gemäß der Achse (X-X') einen ersten Teil (S1), gefolgt von einem zweiten Teil (S2), gefolgt von einem dritten Teil (S3) aufweist, wobei der zweite Teil (S2) eine torische Fläche ist.

7. Motor und/oder Generator (1) nach einem der vorangehenden Ansprüche, wobei jede der Kugeln (34) ein keramisches Material umfasst.

8. Drehgestell für ein Schienenfahrzeug, wobei das Drehgestell mindestens einen Motor und/oder Generator (1) nach einem der vorangehenden Ansprüche umfasst.

9. Schienenfahrzeug, umfassend mindestens ein Drehgestell nach Anspruch 8.

**Claims**

1. An engine and/or generator (1) for a railway vehicle, comprising a housing (10), a shaft (16) rotatable around itself relative to the housing (10) about an axis (X-X'), and at least two oblique ball bearings (18, 20) connecting the shaft (16) and the housing (10),
each of the two oblique ball bearings (18, 20) comprising an outer ring (30) fastened on the housing (10), an inner ring (32) fastened on the shaft (16) and a plurality of balls (34), each of the balls (34) defining an outer contact path (C1) on the outer ring (30) and an inner contact path (C2) on the inner ring (32), the outer contact path (C1) being axially offset relative to the inner contact path (C2), **characterized in that** the engine (1) further comprises at least one cylindrical ball bearing (22) connecting the shaft (16) and the housing (10), the cylindrical ball bearing (22) comprising cylindrical rollers (40), and **in that** the shaft (16) has a first diameter (27A) at the first and second oblique ball bearings (18, 20), and the shaft (16) has a second diameter (27B) at the cylindrical ball bearing (22), the second diameter (27B) being strictly less than the first diameter (27A), the engine (1) being a high-power engine, greater than 100 kW.

2. The engine and/or generator (1) according to claim 1, wherein the outer contact path (C1) comprises, respectively for each of said balls (34), a first point of contact (P1), the inner contact path (C2) comprising, respectively for each of said balls (34), a second point of contact (P2), the first point of contact (P1) and the second point of contact (P2) defining a line (DR) forming an angle (a) of between 15 degrees and 25 degrees with a plane (A-A) perpendicular to the axis (X-X').

3. The engine and/or generator (1) according to any one of the preceding claims, the engine (1) comprising a rotor (14), the oblique ball bearings (18, 20) being arranged axially between the rotor (14) and a part of the shaft (16) suitable for transmitting a drive torque toward a transmission gearbox (6).

4. The engine and/or generator (1) according to any one of the preceding claims, wherein at least one of the oblique ball bearings (18, 20) comprises a cage (36) including brass or thermostable polymer.

5. The engine and/or generator (1) according to any one of the preceding claims, wherein the inner ring (32) defines a groove (S4) comprising the inner contact path (C2), the groove (S4) being symmetrical along a plane (A-A) perpendicular to the axis (X-X'), and the outer ring (30) defining a surface (S) comprising, successively along the axis (X-X'), a first part (S1), followed by a second part (S2), followed by a third part (S3), the first part (S1) being a cylindrical surface having a first radius (R1) and the third part (S3) being a cylindrical surface having a second radius (R2) strictly greater than the first radius (R1), the second part (S2) including the outer contact path (C1).

6. The engine and/or generator (1) according to any one of the preceding claims, wherein the outer ring (30) defines a surface (S) comprising, successively along the axis (X-X'), a first part (S1), followed by a second part (S2), followed by a third part (S3), the second part (S2) being a toroidal surface.

**7.** The engine and/or generator (1) according to any one of the preceding claims, wherein each of the balls (34) comprises a ceramic material.

**8.** A bogie for a railway vehicle, the bogie comprising at least one engine and/or generator (1) according to any one of the preceding claims.

**9.** A railway vehicle comprising at least one bogie according to claim 8.

**FIG.1**

## FIG.2

**EP 3 805 583 B1**

## RÉFÉRENCES CITÉES DANS LA DESCRIPTION

**Documents brevets cités dans la description**

- US 2016149466 A
- FR 2923562 A1
- EP 3467327 A1
- EP 3269477 A1
- CN 102904367 A
- JP 3417726 B